# FASCICULE DE BREVET EUROPEEN

(11) **EP 2 810 286 B1**
(45) Date de publication et mention de la délivrance du brevet: **16.03.2016**
(21) Numéro de dépôt: 13701291.0
(22) Date de dépôt: 29.01.2013
(51) Int. Cl.: B23P 19/00, H01G 11/10, H01G 11/52, H01G 11/78, H01G 11/82, H01G 2/10

(54) **ENTRETOISE DE POSITIONNEMENT, MODULE DE STOCKAGE D'ENERGIE L'UTILISANT ET PROCEDE D'ASSEMBLAGE DU MODULE**
ABSTANDHALTER, ENERGIESPEICHERMODUL,UND IHR HERSTELLUNGSVERFAHREN
STRUT POSITIONING, ELECTRIC ENERGY STORAGE MODULE USING IT, AND MODULE ASSEMBLY PROCESS

(30) Priorité: 03.02.2012 FR 1251018
(43) Date de publication de la demande: 10.12.2014
(73) Titulaire: Blue Solutions, 29500 Ergué Gabéric (FR)
(72) Inventeur: LE BIHAN, Ludovic, F-29100 Poullan-sur-Mer (FR); LE GALL, Laurent, F-29500 Ergue Gaberic (FR); SAGEL, Philippe, F-29510 Edern (FR); JUVENTIN - MATHES, Anne-Claire, F-29000 Quimper (FR)
(74) Mandataire: Regimbeau
(86) Numéro de dépôt international: PCT/EP2013/051661
(87) Numéro de publication internationale: WO 2013/113691

(56) Documents cités:
- EP-A1- 1 450 422
- DE-A1-102009 040 128
- US-A1- 2010 134 940

## Description

L'invention concerne une entretoise de positionnement pour positionner des éléments de stockage d'énergie électrique dans un module de stockage d'énergie.

Ces éléments de stockage d'énergie électrique sont par exemple des supercondensateurs, ou supercapacités, permettant chacune d'avoir une grande capacité en farad, typiquement supérieure à 1 farad pour chaque élément.

Dans l'état de la technique, le module de stockage d'énergie comprend habituellement plusieurs éléments de stockage d'énergie (supercapacités) reliés en série et mis en place dans un boîtier composé d'une enveloppe mécanique rigide en un matériau métallique, comprenant de nombreux conducteurs reliés aux différents éléments et une carte électronique d'équilibrage. De nombreux paramètres doivent être optimisés sur ces modules qui doivent idéalement à la fois présenter un poids peu important, être isolants électriquement, supporter des contraintes mécaniques importantes et également évacuer la chaleur.

On connaît par exemple des modules selon les documents FR-A-2 916 306 et FR-A-2 915 626.

Le document EP-A-1 450 422 décrit une structure de connexion de cellules d'une batterie, comportant des plaques de connexion sur les cellules, les cellules étant logées dans une disposition parallèle les unes aux autres dans des compartiments carrés d'un boîtier de maintien, dont les côtés sont fermés par des éléments de couverture ayant des protubérances extérieures contre une plaque extérieure.

Le document US-A- 2010/013940 décrit une batterie, ayant dans son boîtier deux supports inférieurs et supérieurs pour maintenir des supercondensateurs dans des trous de ces supports.

Le document DE-A-10 2009 040 128 décrit une batterie, dont les cellules connectées entre elles sont en appui contre les trous d'un matelas, qui est logé dans une coupelle se trouvant contre la paroi extérieure de la batterie.

L'un des axes de performance des systèmes de stockage d'énergie est la densité d'énergie en volume (en W.h/l) ou en poids (W.h/kg). Les systèmes doivent donc être les plus légers et les plus confinés possibles.

Cependant, ces systèmes peuvent atteindre des niveaux de tension ou subir des niveaux de surtension très élevés. Il est donc nécessaire d'isoler les réseaux (haute tension/basse tension) entre eux.

De plus, les éléments de stockage d'énergie génèrent de la chaleur en fonctionnement. Cette chaleur doit être évacuée pour un fonctionnement optimal du système. Le stockage d'énergie peut être source de démarrage de feu ou favoriser la propagation d'un feu existant. Idéalement, les matériaux employés pour la mise en module des éléments de stockage d'énergie doivent pouvoir répondre à des exigences élevées de tenue au feu.

L'élément de stockage d'énergie ne requiert pas de position d'utilisation particulière. Sa mise en module ne doit donc pas être restrictive, en ce sens qu'elle doit permettre l'utilisation du système dans différentes positions avec le même niveau de performance.

Enfin, pour faciliter l'industrialisation de ces systèmes, il est recherché une réduction du nombre de pièces, une simplification des opérations d'assemblage, une diminution des coûts des éléments, donc des conceptions permettant d'absorber un certain niveau d'imperfections géométriques au niveau des éléments sans que cela n'altère les performances du produit final (robustesse de conception), et une qualité de produit non "opérateur-dépendante".

Les problèmes énoncés ci-dessus sont relatifs à la problématique générale du stockage d'énergie.

On cherche plus particulièrement à concentrer sur un module l'ensemble des performances électriques et thermiques tout en assurant la contrainte de tenue au feu et d'utilisation dans des positions multiples. Ainsi, le module doit pouvoir être utilisé en le posant sur l'une de ses faces latérales.

Dans les modules de l'état de la technique indiqués ci-dessus, la conception du module manque de robustesse dans les zones de jonction des pièces isolantes. En effet, l'isolation électrique du module nécessite la présence de nombreuses pièces d'habillage et l'opération d'assemblage de ces pièces est une opération délicate qui, si elle est mal faite, crée un jour ou interstice de passage à la jonction de ces pièces, ce qui met à une distance insuffisante les parties actives sous tension (paroi du module recouverte du matériau élastomère) par rapport aux parties à la masse (parois du module recouvertes de mousse) et augmente le risque de court-circuit.

L'invention vise à obtenir une entretoise de positionnement, un module de stockage d'énergie et un procédé d'assemblage d'un module, qui pallient les inconvénients de l'état de la technique.

A cet effet, un premier objet de l'invention est une entretoise de positionnement pour positionner des éléments de stockage d'énergie électrique dans un module de stockage d'énergie électrique, caractérisée en ce que l'entretoise comprend une première partie d'appui et une deuxième partie formant un rebord par rapport à la première partie, l'entretoise de positionnement comportant à l'extrémité libre de sa deuxième partie au moins un évidement de logement, l'entretoise étant réalisée en un matériau isolant de l'électricité.

Suivant un mode de réalisation de l'invention, l'entretoise est de préférence configurée pour que la première et la deuxième partie puissent former un angle non nul, notamment être sensiblement perpendiculaires. Suivant un mode de réalisation de l'invention, l'entretoise peut notamment être conformée pour que les première et deuxième forment un angle non nul entre elles ou comprendre une zone de déformation (telle qu'une zone de pliage, par exemple une zone amincie) à l'interface de ces deux parties (les première et deuxième parties sont alors dans un même plan lors de la fabrication de l'entretoise mais l'entretoise est déformée lors de son installation dans le module).

Suivant un mode de réalisation, la deuxième partie est solidaire de la première partie.

Suivant un mode de réalisation, la deuxième partie est d'une seule pièce avec la première partie.

Un deuxième objet de l'invention est un module de stockage d'énergie, comportant un boîtier extérieur ayant des parois extérieures, comprenant au moins une première paroi et au moins une deuxième paroi adjacente à la première paroi, les parois délimitant un espace intérieur dans lequel sont logés des éléments de stockage d'énergie électrique,

caractérisé en ce que le module comprend au moins une entretoise de positionnement telle que décrite ci-dessus pour positionner au moins certains des éléments de stockage d'énergie électrique par rapport à la première paroi et par rapport à la deuxième paroi adjacente, la première partie de l'entretoise étant destinée à assurer le positionnement par rapport à la au moins une première paroi et la deuxième partie de l'entretoise étant destinée à assurer le positionnement par rapport à la au moins une deuxième paroi.

Suivant un mode de réalisation de l'invention, la au moins une deuxième paroi est généralement sensiblement perpendiculaire à la première paroi.

Suivant un mode de réalisation de l'invention, la première partie est notamment destinée à être en appui (pouvant être directement ou avec interposition d'une autre pièce) contre la première paroi, alors que la deuxième partie est destinée à être en appui contre la deuxième paroi.

Un troisième objet de l'invention est un procédé d'assemblage d'un module tel que décrit ci-dessus, comprenant les étapes suivantes :
on forme un ensemble comprenant les éléments de stockage d'énergie électrique et la au moins une entretoise de sorte que la première partie de chaque entretoise soit placée sur ou sous les éléments et que la deuxième partie de l'entretoise s'étende latéralement à l'extérieur de l'ensemble selon un plan comprenant une parallèle à la direction longitudinale des éléments de stockage,
on entoure l'ensemble d'une bande d'habillage constituant une deuxième pièce d'habillage de sorte que le bord de la bande soit placé dans l'évidement de la deuxième partie de l'entretoise, et on fixe la bande aux éléments,
   on assemble au moins les deuxièmes parois du boîtier sur les éléments de sorte que les parois sont en contact avec la bande d'habillage.

L'invention sera mieux comprise à la lecture de la description qui va suivre, donnée uniquement à titre d'exemple non limitatif en référence aux dessins annexés, sur lesquels :
- la figure 1 est une vue schématique en coupe d'une partie du module suivant un mode de réalisation de l'invention dans l'état fini d'assemblage du module;
- la figure 2 est une vue schématique en perspective éclatée du module suivant un mode de réalisation de l'invention dans l'état fini d'assemblage du module;
- la figure 3 est une vue schématique en coupe d'une partie extérieure du module suivant un mode de réalisation de l'invention dans l'état fini d'assemblage du module;
- la figure 4 est une vue schématique en perspective d'un anneau présent dans le module suivant un mode de réalisation de l'invention ;
- la figure 5 est une vue schématique de dessus d'une partie de fond présente dans le module suivant un mode de réalisation de l'invention ;
- la figure 6 est une vue schématique de dessus d'une partie de fond présente dans le module suivant un autre mode de réalisation de l'invention ;
- la figure 7 est une vue schématique en perspective de la partie de fond suivant la figure 6 ;
- la figure 8 est une vue en perspective éclatée des parties intérieures au module suivant un mode de réalisation de l'invention ;
- la figure 9 est une vue schématique en perspective d'une partie du module suivant un mode de réalisation de l'invention dans l'état fini d'assemblage du module,
- la figure 10 est une vue schématique en perspective éclatée du module suivant le mode de réalisation de l'invention de la figure 2;
- la figure 11 est une vue schématique en coupe d'une partie du module suivant un autre mode de réalisation de l'invention dans l'état fini d'assemblage du module.

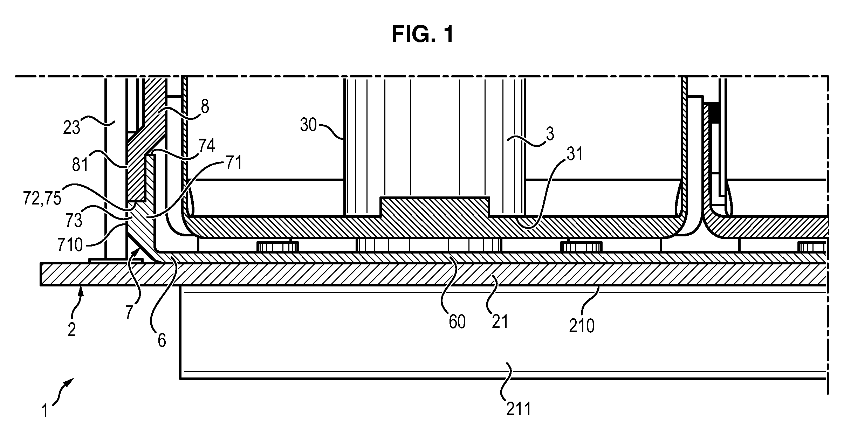

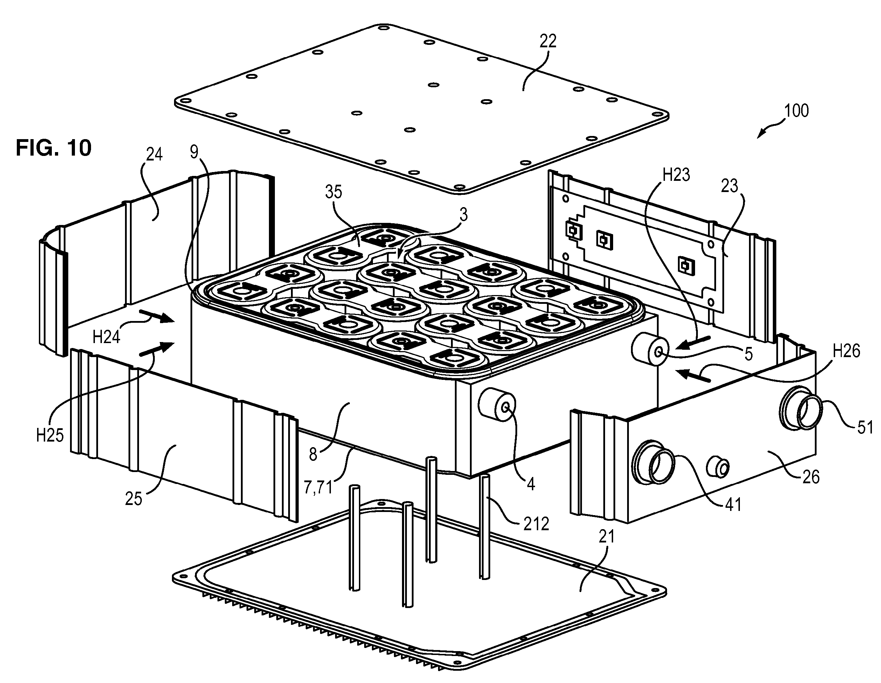

Aux figures 1 à 11, il est prévu une entretoise de positionnement (7) et/ou (9) pour positionner des éléments de stockage d'énergie électrique dans un module de stockage d'énergie électrique. L'entretoise comprend une première partie (6 ; 92) d'appui et une deuxième partie (71, 91) formant un rebord (71, 91) par rapport à la première partie (6 ; 92). L'entretoise (7) de positionnement comporte à l'extrémité libre de sa deuxième partie (71, 91) au moins un évidement (72, 93) de logement, l'entretoise étant réalisée en un matériau isolant de l'électricité.

Les modes de réalisation ci-dessous sont décrits en référence aux figures 1 à 11.

Suivant un mode de réalisation de l'invention, l'entretoise (7) et/ou (9) constitue un anneau (7, 9) fermé d'entretoisement.

Suivant un mode de réalisation de l'invention, la première partie est une couche (60 ; 92) de matériau sensiblement plane délimitée par un contour extérieur, le contour extérieur étant longé au moins partiellement par la deuxième partie (71, 91).

Suivant un mode de réalisation de l'invention, la deuxième partie (71, 91) comprend plusieurs portions non reliées entre elles.

Suivant un mode de réalisation de l'invention, dans le cas où la première partie est une couche (60) délimitée par un contour extérieur, la deuxième partie est conformée de sorte que la ou les portions la constituant longent la totalité du contour de la première partie, afin de garantir une meilleure isolation. Suivant un mode de réalisation de l'invention, la deuxième partie (71, 91) est sensiblement perpendiculaire à la première partie (6 ; 92).

Suivant un mode de réalisation de l'invention, la première partie de l'entretoise comprend au moins un plot (602) pour le maintien des éléments à distance l'un de l'autre, ce qui permet d'isoler électriquement les différents éléments les uns par rapport aux autres.

Suivant un mode de réalisation de l'invention, un module (1) de stockage d'énergie comporte un boîtier extérieur (2) ayant des parois extérieures (21, 22, 23, 24, 25, 26), comprenant au moins une première paroi (21, 22) et au moins une deuxième paroi (23, 24, 25) adjacente à la première paroi (21, 22), les parois (21, 22, 23, 24, 25, 26) délimitant un espace intérieur dans lequel sont logés des éléments (3) de stockage d'énergie électrique,
caractérisé en ce que le module comprend au moins une entretoise de positionnement (7 ; 9) telle que décrite ci-dessus pour positionner au moins certains des éléments (3) de stockage d'énergie électrique par rapport à la première paroi (21, 22) et par rapport à la deuxième paroi (23, 24, 25) adjacente, la première partie (6 ; 92) de l'entretoise étant destinée à assurer le positionnement par rapport à la au moins une première paroi (21, 22) et la deuxième partie (71, 91) de l'entretoise étant destinée à assurer le positionnement par rapport à la au moins une deuxième paroi (23, 24, 25).

Suivant un mode de réalisation de l'invention, la au moins une deuxième paroi (23, 24, 25) adjacente à la première paroi (21, 22) est sensiblement perpendiculaire à la première paroi.

Suivant un mode de réalisation de l'invention, la première partie (6 ; 92) de l'entretoise est en appui contre la au moins une première paroi (21, 22).

Suivant un mode de réalisation de l'invention, la deuxième partie (71, 91) de l'entretoise est en appui contre la au moins une deuxième paroi (23, 24, 25).

Suivant un mode de réalisation de l'invention, le module comprend une première pièce (60) d'habillage en un matériau isolant de l'électricité, destinée à recouvrir au moins partiellement la première paroi (21) du module pour être située entre la première paroi (21) et les éléments (3) de stockage d'énergie électrique.

Suivant un mode de réalisation de l'invention, la première pièce (6) d'habillage est une pièce (60) de dissipation thermique et d'isolation électrique, réalisée en un matériau conducteur thermiquement et s'étendant sensiblement parallèlement à la première paroi (21), pour dissiper vers cette première paroi (21) de la chaleur dégagée par les éléments (3) de stockage d'énergie électrique. Alternativement, suivant un mode de réalisation de l'invention, l'entretoise de positionnement peut également être rapportée sur la pièce d'habillage dans le module selon l'invention (par compression, une fois le module à l'état final, par clipsage, etc).

Suivant un mode de réalisation de l'invention, la pièce (60) de dissipation thermique et d'isolation électrique est constituée par la première partie (6) de la au moins une entretoise (7).

Suivant un mode de réalisation de l'invention, le rebord (71) longe au moins une partie du contour de la pièce (60).

Suivant un mode de réalisation de l'invention, le module comprend au moins une deuxième pièce (8) d'habillage en un matériau isolant de l'électricité, destinée à recouvrir au moins partiellement la au moins une deuxième paroi (23, 24, 25) du module pour être située entre ladite deuxième paroi (23, 24, 25) et les éléments (3) de stockage d'énergie électrique, l'évidement (72, 93) de la au moins une entretoise servant à loger un bord (81, 87) de la deuxième pièce (8) d'habillage.

Suivant un mode de réalisation de l'invention, la deuxième pièce (8) d'habillage est en un matériau compressible au moins dans son bord (81, 87) logé dans l'évidement (72, 93) pour assurer un maintien de la pièce d'habillage relativement à l'entretoise.

Suivant un mode de réalisation de l'invention, l'évidement peut être configuré de sorte qu'on ne dépasse pas la limite de compressibilité du matériau compressible pour préserver les propriétés d'isolation au cours du temps. Suivant un mode de réalisation de l'invention, l'épaisseur de l'évidement (selon la direction normale à la deuxième) est ainsi choisie entre 1 et 4 mm, notamment 2 et 3 mm. Suivant un mode de réalisation de l'invention, l'évidement peut s'étendre sur toute la longueur de la deuxième partie ou seulement sur une partie de celle-ci.

Suivant un mode de réalisation de l'invention, la au moins une deuxième pièce (8) d'habillage est constituée par une bande enroulée autour de la totalité des éléments (3) de stockage d'énergie électrique et fixée à ces éléments(3) de stockage d'énergie électrique, notamment à l'aide d'un adhésif.

Suivant un mode de réalisation de l'invention, l'entretoise de positionnement comporte au moins une butée (75) délimitant une extrémité de l'évidement de logement (72, 93) et située à distance de l'extrémité libre de la deuxième partie (71 ; 91). Cette butée est notamment perpendiculaire à la deuxième paroi. Grâce à une telle butée, on peut assurer une isolation électrique performante tout et un montage simple. En effet, on assure efficacement le maintien des pièces d'habillage en position et on simplifie la mise en place de la deuxième pièce d'habillage sur le module puisqu'à l'aide de la butée, il est plus facile pour l'opérateur de positionner la deuxième pièce d'habillage (mousse) sans laisser un jour à la jonction des parois du boîtier.

Suivant un mode de réalisation de l'invention, la butée peut être constituée d'une paroi s'étendant sur tout ou partie de la dimension de l'évidement ou peut comprendre une pluralité de parois de butée réparties sur toute la dimension de l'évidement. Suivant un mode de réalisation de l'invention, ces parois de butée sont alors dans un même plan et séparées par des vides,

Suivant un mode de réalisation de l'invention, l'entretoise constitue un anneau (7, 9) fermé d'entretoisement, l'anneau (7, 9) formant cette entretoise étant dimensionné pour entourer une pluralité d'éléments (3) de stockage d'énergie électrique juxtaposés.

Suivant un mode de réalisation de l'invention, l'anneau (7, 9) comprend, à l'interface entre deux éléments (7, 9) déterminés adjacents, au moins une lèvre (96) configurée pour écarter localement l'entretoise par rapport à la deuxième paroi (23, 24, 25) et suivre le contour des deux éléments adjacents déterminés. Ainsi, l'anneau d'entretoisement reste solidaire des éléments, ce qui facilite sa mise en place et permet d'éviter un contact des éléments avec la paroi du boîtier.

Suivant un mode de réalisation de l'invention, le boîtier extérieur (2) a la forme générale d'un parallélépipède, comprenant deux premières faces (21, 22) constituant les faces de plus grandes aires du boîtier (2), adjacentes à quatre autres faces (23, 24, 25, 26) du paralèllépipède, désignées deuxièmes faces, il est prévu comme entretoise au moins une première entretoise (7), dont la première partie (6) est en appui contre une des deux premières faces (21, 22) formant la première paroi (21, 22) et dont la deuxième partie est en appui contre au moins l'une des deuxièmes faces (23, 24, 25) formant la au moins une deuxième paroi (23, 24, 25).

Suivant un mode de réalisation de l'invention, il est prévu comme entretoise au moins une deuxième entretoise (9), dont la première partie (92) est en appui contre l'autre première face (22) formant une autre première paroi (22) du boîtier (2) et dont la deuxième partie (91) est en appui contre au moins l'une des deuxièmes faces (23, 24, 25) formant la au moins une deuxième paroi (23, 24, 25).

Suivant un mode de réalisation de l'invention, le module comprend :
l'unique première entretoise (7) dont la première partie (6) est constituée par une première pièce (60) d'habillage en un matériau isolant de l'électricité, destinée à recouvrir au moins partiellement la première paroi (21) du module pour être située entre la première paroi (21) et les éléments (3) de stockage d'énergie électrique, la première pièce (60) d'habillage étant une pièce (60) de dissipation thermique et d'isolation électrique, réalisée en un matériau conducteur thermiquement et s'étendant sensiblement parallèlement à la première paroi (21), pour dissiper vers cette première paroi (21) de la chaleur dégagée par les éléments (3) de stockage d'énergie électrique,
   et
l'unique deuxième entretoise (9), formant un anneau d'entretoisement.

Suivant un mode de réalisation de l'invention, le module comprend au moins un renfort mécanique (212) traversant le boîtier pour relier deux parois opposées du module, notamment par exemple les deux parois de plus grande aire.

Dans ce cas, suivant un mode de réalisation de l'invention, l'entretoise (7 ; 9) peut comprendre au moins un ajour (603) destiné à accueillir le renfort mécanique et un fût (604) délimitant le contour de l'ajour, notamment par exemple dans sa première partie (71 ; 91). On évite ainsi les fuites de courant au niveau des renforts mécaniques.

Suivant un mode de réalisation de l'invention, l'entretoise de positionnement, et éventuellement la pièce de dissipation, est réalisée en un matériau élastomère, par exemple en EPDM (éthylène-propylène-diène monomère). Suivant un mode de réalisation de l'invention, la face extérieure (210) de la première paroi est en contact avec un au moins une pièce supplémentaire de dissipation de chaleur (211).

Suivant un mode de réalisation de l'invention, le module comporte des bornes électriques (4, 5) accessibles de l'extérieur, des moyens (35) de connexion électrique étant prévus pour former entre ces bornes électriques (4, 5) un circuit électrique avec les éléments (3) de stockage d'énergie électrique,

Suivant un mode de réalisation de l'invention, il est prévu un procédé d'assemblage du module tel que décrit ci-dessus, comprenant les étapes suivantes :
on forme un ensemble comprenant les éléments (3) de stockage d'énergie électrique et la au moins une entretoise de sorte que la première partie (6, 92) de chaque entretoise soit placée sur ou sous les éléments (3) et que la deuxième partie (71, 91) de l'entretoise (7, 9) s'étende latéralement à l'extérieur de l'ensemble selon un plan comprenant une parallèle à la direction longitudinale (L) des éléments (3) de stockage,
on entoure l'ensemble d'une bande d'habillage (8) constituant une deuxième pièce (8) d'habillage de sorte que le bord (81) de la bande (8) soit placé dans l'évidement (72, 93) de la deuxième partie (71, 91) de l'entretoise (7, 9), et on fixe la bande aux éléments (3),
   on assemble au moins les deuxièmes parois (23-26) du boîtier (2) sur les éléments (3) de sorte que les parois sont en contact avec la bande (8) d'habillage.

Suivant un mode de réalisation de l'invention, on fixe la bande aux éléments (3), par exemple à l'aide d'un adhésif. Suivant un mode de réalisation de l'invention, la bande d'habillage (notamment de mousse) peut être placée en butée contre une butée de positionnement (75) de l'entretoise.

Suivant un mode de réalisation de l'invention, si la première partie de l'entretoise (7) est une couche (60), on pose les éléments (3) sur cette couche (60).

Suivant un mode de réalisation de l'invention, si l'entretoise forme un anneau d'entretoisement (9), on entoure les éléments (3) avec l'entretoise (9).

Suivant un mode de réalisation de l'invention, on peut également mettre en place une entretoise (7, 9) à chaque extrémité (31, 32) des éléments (3).

Suivant un mode de réalisation, la deuxième partie (71, 91) est solidaire de la première partie (6, 92).

Suivant un mode de réalisation, la deuxième partie (71, 91) est d'une seule pièce avec la première partie (6, 92).

Suivant un mode de réalisation de l'invention, il est prévu un module de stockage d'énergie, comportant un boîtier extérieur (2) ayant des parois extérieures (21, 22, 23, 24, 25, 26), comprenant une première paroi (21) et au moins une deuxième paroi (23, 24, 25) adjacente à la première paroi (21), les parois (21, 22, 23, 24, 25, 26) délimitant un espace intérieur dans lequel sont logés des éléments (3) de stockage d'énergie électrique,
module dans lequel entre la première paroi (21) et les éléments (3) de stockage d'énergie électrique est interposée au moins une première pièce (60) de dissipation thermique et d'isolation électrique, s'étendant sensiblement parallèlement à la première paroi (21), pour dissiper vers cette première paroi (21) de la chaleur dégagée par les éléments (3) de stockage d'énergie électrique,
caractérisé en ce que
une entretoise (7) de positionnement comportant un rebord (71) de contact contre une partie de la deuxième paroi (23, 24, 25), lequel rebord (71) s'étend en saillie transversale par rapport à la première pièce (60) de dissipation thermique et d'isolation électrique, est positionnée de sorte que le rebord (71) longe au moins une partie du contour de la première pièce (60) de dissipation thermique et d'isolation électrique, l'entretoise (7) de positionnement étant en un matériau isolant de l'électricité.

Suivant un mode de réalisation de l'invention, l'entretoise est fixée à au moins une partie du contour de la première pièce (60) de dissipation thermique.

Suivant un mode de réalisation de l'invention, le module comporte des bornes électriques (4, 5) accessibles de l'extérieur, des moyens (35) de connexion électrique étant prévus pour former entre ces bornes électriques (4, 5) un circuit électrique avec les éléments (3) de stockage d'énergie électrique,

Suivant un mode de réalisation de l'invention, l'entretoise (7) de positionnement et la première pièce (60) de dissipation thermique sont d'une seule pièce en ledit matériau isolant de l'électricité.

Suivant un mode de réalisation de l'invention, l'entretoise (7) de positionnement est une pièce séparée de la première pièce (60) de dissipation thermique, en étant superposée à, par exemple rapportée sur, cette dernière.

Suivant un mode de réalisation de l'invention, l'entretoise (7) de positionnement est fixée à l'ensemble du contour de la première pièce (60).

Suivant un mode de réalisation de l'invention, l'entretoise (7) de positionnement est fixée à une partie du contour de la première pièce (6) de dissipation thermique, en face de trois deuxièmes parois latérales adjacentes (23, 24, 25) les unes aux autres.

Suivant un mode de réalisation de l'invention, l'entretoise (7) de positionnement comporte sur son rebord (71) au moins un évidement (72) servant à loger un bord (81) d'une deuxième pièce (8) d'habillage en un matériau isolant de l'électricité, située entre la deuxième paroi (23, 24, 25) et les éléments (3).

Suivant un mode de réalisation de l'invention, l'évidement (81) est tourné vers la deuxième paroi (23, 24, 25).

Suivant un mode de réalisation de l'invention, l'évidement (81) est délimité par une partie située en arrière par rapport au côté extérieur (710) du rebord (71) servant au contact avec la deuxième paroi (23, 24, 25), pour loger le bord (81) de la deuxième pièce (8) d'habillage entre la deuxième paroi (23, 24, 25) et cette partie.

Suivant un mode de réalisation de l'invention, le module comporte un anneau (9) d'entretoisement en commun entre plusieurs des parois (23, 24, 25) et ceux des éléments (3) situés en face de ces parois (23, 24, 25), cet anneau (9) étant en appui sur une zone de plusieurs de ces éléments (3), distante de l'entretoise (7) de positionnement, et étant périphérique à ces éléments (3).

Suivant un mode de réalisation de l'invention, l'anneau (9) d'entretoisement est situé en commun contre ladite zone desdits éléments (3), comprenant la partie de leur arête proximale par rapport auxdites parois (23, 24, 25).

Suivant un mode de réalisation de l'invention, l'anneau (9) d'entretoisement comporte deux rebords (91, 92) adjacents d'appui contre deux côtés adjacents situés dans ladite zone desdits éléments (3), les rebords adjacents (91, 92) et les côtés adjacents formant un angle non nul entre eux.

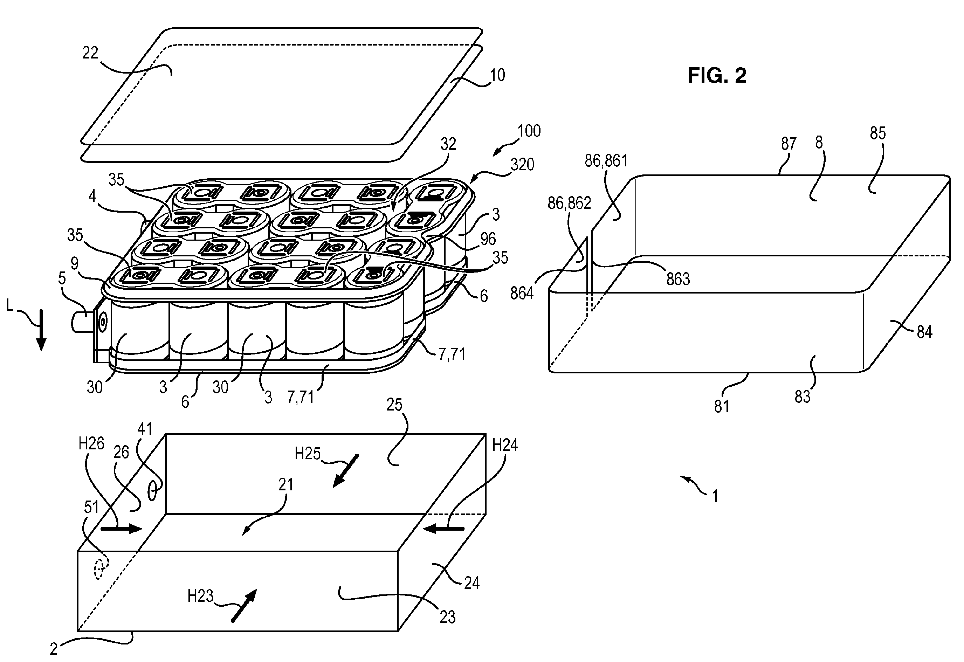

Aux figures, il est prévu comme parois extérieures une première paroi 21 et au moins une deuxième paroi 23, 24, 25, 26 adjacente à cette première paroi 21. Le boîtier extérieur 2 ayant été assemblé a, dans le mode de réalisation représenté à la figure 2, par exemple la forme générale d'un parallélépipède, avec une première paroi 21, qui est une première des deux parois de plus grande aire du parallélépipède, et quatre deuxièmes parois 23, 24, 25, 26 formées par les quatre autres parois du parallélépipède, qui sont adjacentes à cette première paroi 21 et qui sont adjacentes les unes aux autres, la paroi 22 étant l'autre paroi de plus grande aire, opposée à la paroi 21 et adjacente aux parois 23, 24, 25, 26 dans l'état fini d'assemblage du module 1 (la paroi 22 est représentée séparée des autres parois 21, 22, 23, 24 et 25 à la figure 2 mais est bien entendu fixée à ces dernières dans l'état fini d'assemblage). Dans ce qui suit, la première paroi 21 est appelée paroi 21 de fond, la paroi 22 est appelée paroi supérieure, et les parois 23, 24, 25, 26 sont appelées parois latérales. Mais, bien entendu, le module 1 peut être disposé avec n'importe laquelle des parois 21, 22, 23, 24, 25, 26 disposée en bas dans l'état fini d'assemblage.

Le boîtier 2 comporte des bornes électriques 4, 5 accessibles de l'extérieur. Des moyens de connexion électriques sont prévus pour former entre les bornes 4, 5 un circuit électrique avec les éléments 3 de stockage d'énergie électrique. Les parois 21, 22, 23, 24, 25, 26 sont conductrices de l'électricité et par exemple métalliques. Ces parois 21, 22, 23, 24, 25, 26 sont par exemple destinées à être mises à un même potentiel électrique, par exemple à une masse électrique. Des organes isolants sont par exemple prévus autour des bornes 4 et 5 pour isoler ces bornes 4, 5 de la paroi latérale 26 qu'elles traversent, la paroi 26 ayant deux trous 41, 51 permettant le passage des bornes 4, 5 et de ces organes isolants. Les bornes 4, 5 sont accessibles de l'extérieur du boitier 2 pour permettre de les connecter électriquement à un circuit extérieur.

Les éléments 3 de stockage d'énergie électrique sont par exemple des supercondensateurs, ayant chacun une capacité individuelle de valeur supérieure ou égale à 1 Farad. Le module 1 est apte à être chargé et déchargé en énergie électrique par les bornes 4, 5. Bien entendu, le module 1 peut comporter d'autres bornes électriques accessibles depuis l'extérieur pour sa charge et/ou sa décharge, et/ou d'autres accès de communication avec l'extérieur et/ou de commande par l'extérieur et/ou de surveillance de paramètres depuis l'extérieur.

Ces éléments 3 de stockage d'énergie électrique sont par exemple connectés en série par les moyens de connexion. Chaque élément 3 de stockage d'énergie électrique a par exemple deux bornes électriques de connexion. Chaque élément 3 a par exemple une première face inférieure 31 tournée vers la première paroi 21 et une autre face 32 éloignée de cette première face 31 et tournée vers la paroi 22. Une première des bornes de connexion de l'élément 3 de stockage d'énergie électrique est par exemple située sur sa première face 31, tandis que la deuxième des bornes de connexion de l'élément 3 de stockage d'énergie électrique est par exemple située sur sa deuxième face 32. Aux figures, chaque élément 3 a une forme générale cylindrique circulaire entre ses faces 31 et 32. Les éléments 3 sont disposés côte-à-côte dans le boîtier 2. Les axes de révolution des éléments 3 sont par exemple sensiblement parallèles. Dans d'autres variantes non représentées, les éléments de stockage d'énergie électrique peuvent être d'une autre forme, par exemple parallélépipédique, carrée, ovale, hexagonale ou autres.

Dans le mode de réalisation représenté aux figures, les éléments 3 de stockage d'énergie électrique sont disposés de sorte que leurs axes de révolution sont perpendiculaires aux parois inférieure et supérieure 21, 22 du boîtier 2.

Les moyens de connexion sont par exemple formés par des barrettes de connexion métalliques 35 conductrices de l'électricité, reliant deux à deux les faces 31 et par d'autres barrettes 35 reliant deux à deux les faces 32 des éléments 3. Les barrettes sont généralement soudées sur les faces des éléments 3.

On décrit ci-dessous un exemple de réalisation représenté aux figures 1 à 10, dans lequel la première partie 6 de la première entretoise 7 de positionnement est une première pièce 60 d'habillage formée par une première pièce 60 de dissipation thermique et d'isolation électrique interposée entre la première paroi 21 et les éléments 3 de stockage d'énergie.

En effet, les éléments 3 de stockage d'énergie électrique conduisent préférentiellement de la chaleur selon leur axe de révolution - parallèle à la direction longitudinale L représentée à la figure 2 -, de sorte qu'un refroidissement axial des éléments 3 de stockage d'énergie électrique est plus efficace qu'un refroidissement transversal à cette direction L. La mise en contact thermique des éléments 3 de stockage d'énergie électrique avec la première paroi 21 permet d'améliorer le refroidissement des éléments 3 de stockage d'énergie électrique par une augmentation de la surface d'échange thermique entre les éléments 3 et l'extérieur du module 1.

La première pièce 60 de dissipation thermique et d'isolation électrique est en un matériau isolant de l'électricité et conducteur de la chaleur.

La première pièce 60 de dissipation thermique et d'isolation électrique, s'étend sensiblement parallèlement à la première paroi 21, pour dissiper la chaleur dégagée par les éléments vers cette première paroi 21.

A l'état fini d'assemblage, lorsque le sous-ensemble assemblé 100, comportant les éléments 3 de stockage d'énergie électrique et la première pièce 60, se trouve dans le boîtier 2, la première pièce 60 de dissipation thermique et d'isolation électrique est au contact des éléments 3 de stockage d'énergie et est également au contact de la première paroi 21 pour dissiper la chaleur dégagée par les éléments 3 de stockage d'énergie vers cette première paroi 21.

Suivant un mode de réalisation, la première pièce 60 de dissipation thermique et d'isolation électrique comprend par exemple une couche 60 s'étendant entre les éléments 3 et la première paroi 21 et s'étendant au moins en face des éléments 3.

Suivant un mode de réalisation,, la face extérieure 210 de la première paroi 21 est en contact avec au moins une pièce supplémentaire 211 de dissipation de chaleur. Suivant un mode de réalisation, la pièce supplémentaire 211 de dissipation de chaleur comporte par exemple des ailettes ou plus généralement un dispositif permettant d'augmenter la surface de contact avec l'atmosphère par rapport à la surface de la face 21, pour dissiper la chaleur vers l'extérieur.

La première pièce 60 de dissipation thermique et d'isolation électrique est par exemple en un matériau déformable. La première pièce 60 de dissipation thermique et d'isolation électrique est par exemple en un matériau d'élastomère, tel que par exemple en EPDM (éthylène-propylène-diène monomère), et a par exemple une résistivité supérieure à 10¹² ohm.cm et par exemple de préférence supérieure à 10¹⁴ ohm.cm.

La deuxième partie de la première entretoise 7 de positionnement comporte un rebord 71 de contact contre une partie de la deuxième paroi 23, 24, 25. Le rebord 71 s'étend en saillie transversale par rapport à la première pièce 60 de dissipation thermique et d'isolation électrique. Dans ce mode de réalisation, l'entretoise 7 de positionnement est d'un seul tenant avec au moins une partie du contour de la première pièce 60 de dissipation thermique et d'isolation électrique. L'entretoise 7 de positionnement est en un matériau isolant de l'électricité, notamment, dans le cas présent, le même matériau que celui de la pièce de dissipation. Le rebord 71 s'étend donc transversalement par rapport à la première paroi 21 et parallèlement par rapport à la deuxième paroi 23, 24, 25. Le rebord 71 s'étend transversalement par rapport au plan général dans lequel s'étend la première pièce 60 de dissipation thermique et d'isolation électrique. Le rebord 71 est par exemple perpendiculaire à la première pièce 60 de dissipation thermique et d'isolation électrique. Le rebord 71 est par exemple perpendiculaire à la première paroi 21. Bien entendu, le rebord 71 pourrait également s'étendre en oblique par rapport à la première pièce 60 de dissipation thermique et d'isolation électrique et/ou par rapport à la première paroi 21. Le rebord 71 s'étend donc transversalement par rapport à la première paroi 21. Dans le mode de réalisation de la figure 2, le rebord 71 fait saillie vers le haut au-dessus de la première paroi inférieure 21. Dans le mode de réalisation de la figure 2, le rebord 71 fait saillie vers le haut en direction de la paroi 22 supérieure.

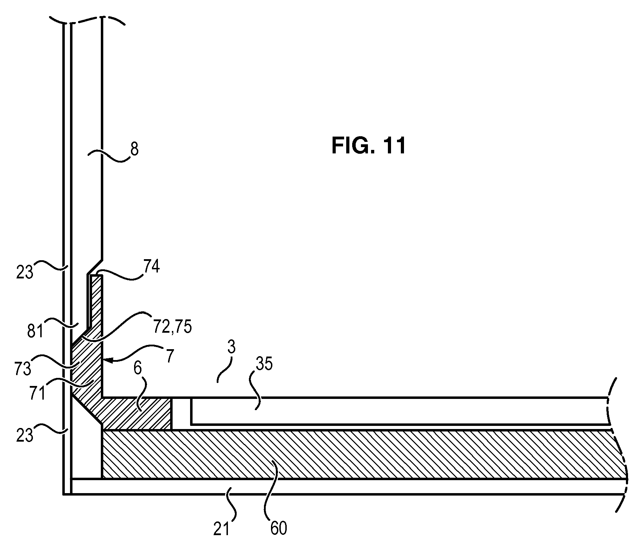

Dans d'autres modes de réalisation, comme par exemple celui représenté à la figure 11, l'entretoise 7 de positionnement peut être une pièce séparée de la première pièce 60 de dissipation thermique. Dans un mode de réalisation, l'entretoise 7 de positionnement est rapportée sur la première pièce 60 de dissipation thermique de sorte que le rebord 71 soit positionné pour être en saillie transversale de la pièce 60 de dissipation. Elle peut être posée simplement sur la pièce et maintenue en place par compression une fois le module en l'état final ou fixée sur la pièce de dissipation, par exemple par clipsage ou autre sur une partie du contour de la première pièce ou sur tout le contour de la première pièce.

Suivant un autre exemple de réalisation de l'invention, représenté à la figure 11, la première partie (6) de l'entretoise (7) est en appui contre la première paroi (21) avec interposition de la première pièce (60) d'habillage.

Dans les modes de réalisation représentés aux figures 1 à 10, la première entretoise 7 de positionnement est fixée à l'ensemble du contour de la première pièce 60. L'entretoise 7 de positionnement comporte par exemple un rebord 71 de contact contre chacune des quatre deuxièmes parois 23, 24, 25, 26, le rebord étant d'un seul tenant.

Par conséquent, lorsque la première pièce 60 avec les éléments 3 dessus se trouve dans le boîtier 2 dans son état fini d'assemblage, ainsi que représenté par les parois 21, 23, 24, 25, 26 à la figure 2, l'entretoise 7 de positionnement est appliquée par son rebord 71 contre les deuxièmes parois 23, 24, 25 et/ou 26, ainsi que représenté à titre d'exemple pour la paroi 23 à la figure 1, pour garantir l'isolation électrique au niveau de la jonction entre cette deuxième paroi 23, 24, 25, 26 et la première paroi 21 adjacente. Cette entretoise 7 garantit qu'il n'y aura aucune lacune d'isolation dans les coins intérieurs et les arêtes intérieures du boîtier (entre la première paroi 21 et la deuxième paroi 23, 24, 25, 26).

Dans un autre mode de réalisation, l'entretoise 7 de positionnement pourrait être fixée à une partie du contour de la première pièce 60 de dissipation thermique, par exemple en face de deux ou trois deuxièmes parois latérales 23, 24, 25 adjacentes les unes aux autres. Elle pourrait également comprendre une pluralité de rebords d'un seul tenant avec la pièce de dissipation mais indépendant entre eux.

Par conséquent, dans un mode de réalisation représenté aux figures 1, 2, 10 et 11, le boîtier extérieur a la forme générale d'un parallélépipède, la première paroi 21 est une première des deux faces de plus grande aire du parallélépipède, adjacentes à quatre autres deuxièmes faces du parallélépipède, parmi lesquelles se trouve la ou les deuxième(s) paroi(s) 23, 24, 25, l'entretoise 7 de positionnement comportant le rebord 71 de contact contre une partie de chacune de la ou des deuxième(s) paroi(s) 23, 24, 25, 26.

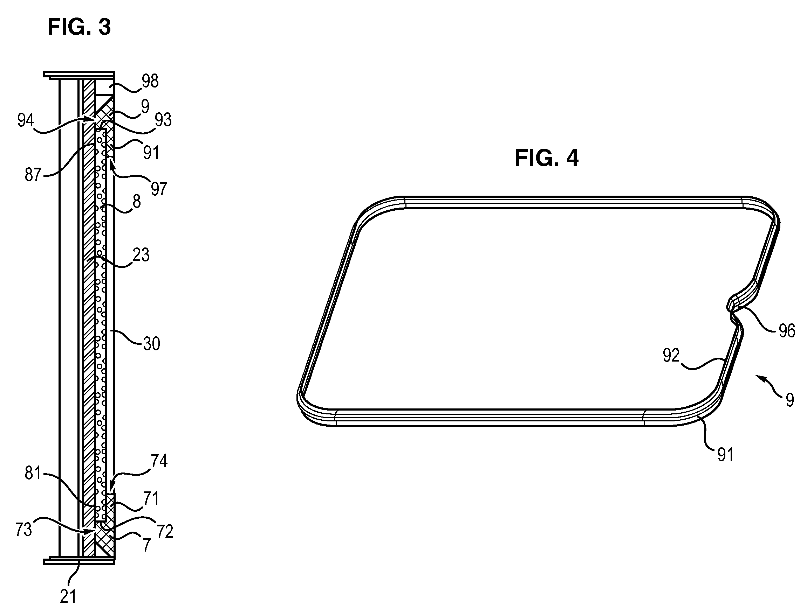

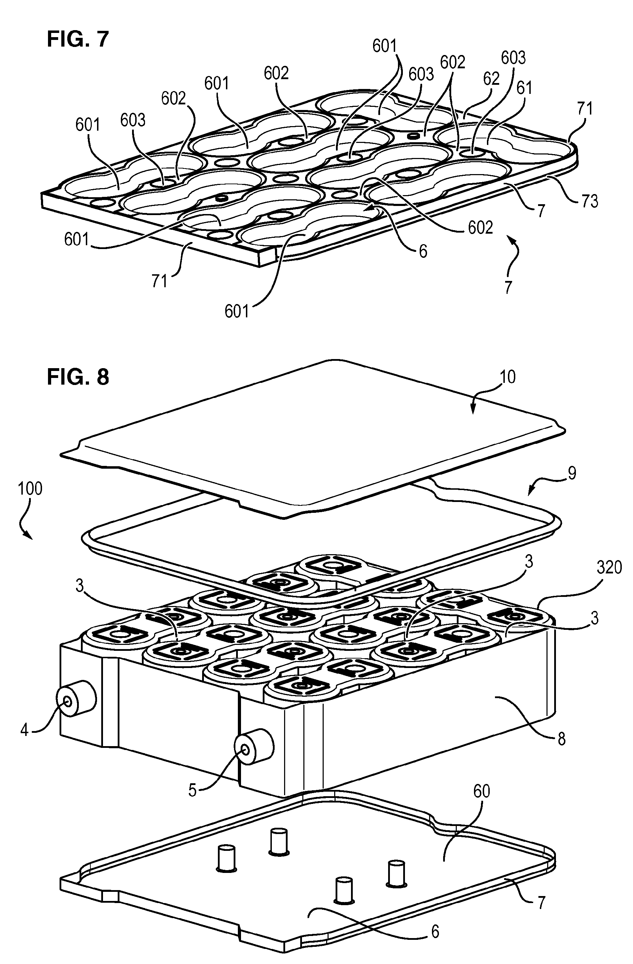

Dans les modes de réalisation représentés aux figures, l'entretoise 7 de positionnement comporte sur son rebord 71 au moins une saillie 73 en direction de la paroi 23 du boîtier. Dans les modes de réalisation représentés, la au moins une saillie 73 s'étend parallèlement à la première paroi 21 en direction de la paroi 23 du boîtier. La saillie 73 du rebord 71 est d'épaisseur supérieure au reste du rebord 71. Cette épaisseur est prise selon la direction normale à la deuxième paroi. La saillie est placée sur la face de l'entretoise tournée vers la deuxième paroi 23, 24, 25, 26 correspondante. Cette saillie 73 est située à distance de l'extrémité libre 74 du rebord 71 de sorte que le rebord 71 présente au voisinage de l'extrémité libre 74 un évidement 72 servant à loger un bord 81 d'une deuxième pièce 8 d'habillage en un matériau isolant de l'électricité. Cette pièce 8 d'habillage est située entre la deuxième paroi 23, 24, 25, 26 et les éléments 3. Dans le mode de réalisation représenté aux figures 1 et 3, cet évidement 72 est tourné vers la deuxième paroi correspondante 23, 24, 25, 26, c'est-à-dire vers l'extérieur. Une face 75 de la saillie 73 essentiellement parallèle à la paroi 21 sert de butée de positionnement de la pièce d'habillage 8. Dans le mode de réalisation représenté à la figure 7, la saillie 73 s'étend continûment sur toute la longueur du rebord 71 le long des faces 23, 24, 25. Alternativement, le rebord 71 pourrait comprendre une pluralité de saillies 73 réparties régulièrement sur toute sa longueur, la butée étant alors formée par la pluralité des parois supérieures des saillies 73 (situées dans un même plan), réparties le long du rebord 71 et séparées les unes des autres par des espaces vides.

Dans un mode de réalisation, la deuxième pièce 8 d'habillage est en un matériau compressible au moins sur son bord 81 logé dans l'évidement 72 pour assurer un maintien en position du bord 81 de la deuxième pièce 8 d'habillage dans cet évidement 72. La compression du bord 81 de la deuxième pièce 8 d'habillage dans l'évidement 72 assure le maintien en position de la pièce 8 d'habillage en la coinçant dans l'évidement 72.Par conséquent, ainsi qu'on le voit à la figure 1, le bord 81 de la deuxième pièce 8 d'habillage se trouve entre la deuxième paroi et l'extrémité libre 74 pour être comprimé dans l'évidement 72. En variante, la pièce 8 d'habillage pourrait être superposée au rebord 71 de sorte que la saillie 73 s'enfonce dans la pièce 8 la maintenant en place par compression.

La deuxième pièce 8 d'habillage est en un matériau synthétique, par exemple en mousse compressible.

La deuxième pièce 8 d'habillage est par exemple périphérique à l'ensemble des éléments 3. La pièce 8 d'habillage est par exemple en face de l'extérieur de la surface latérale 30 de ceux des éléments 3, qui sont le plus à l'extérieur, c'est-à-dire ceux des éléments 3 qui sont les plus proches et/ou en face des parois 23, 24, 25, 26. La pièce 8 d'habillage est par exemple collée par une matière adhésive contre l'extérieur de la surface latérale 30 de ceux des éléments 3, qui sont le plus à l'extérieur.

La deuxième pièce 8 d'habillage s'étend le long des deuxièmes parois 23, 24, 25 et 26 et comporte donc quatre faces, respectivement 83, 84, 85, 86 situées en face respectivement des parois 23, 24, 25, 26.

Dans le mode de réalisation représenté aux figures 2 et 8, la deuxième pièce 8 d'habillage est par exemple une bande d'une seule pièce, périphérique aux éléments 3, avec donc les faces 83, 84, 85, 86 solidaires entre elles. La face 86 est par exemple en deux moitiés 861 et 862 séparées, se recouvrant par les deux extrémités 863 et 864 de la bande 8. Par conséquent, l'évidement 72 dans lequel se trouve le bord 81 de la deuxième pièce 8 d'habillage assure un doublement de l'isolation par le fait que ce bord 81 recouvre la partie 73 du rebord 71, qui sont tous deux en un matériau isolant de l'électricité, en même temps qu'un maintien en position de cette pièce 8 d'habillage, pour assurer ainsi de manière fiable une continuité de l'isolation électrique et éviter les lacunes dans l'isolation électrique.

L'élément 8 d'habillage isolant est préservé d'un écrasement au-delà de sa limite admissible dans l'évidement 72 du fait de la configuration du rebord et notamment des dimensions de l'évidement. Il conserve donc toutes ses propriétés d'isolation électrique. L'évidement 72 offre donc un repère visuel à l'opérateur lorsqu'il met en place l'élément 8 d'habillage.

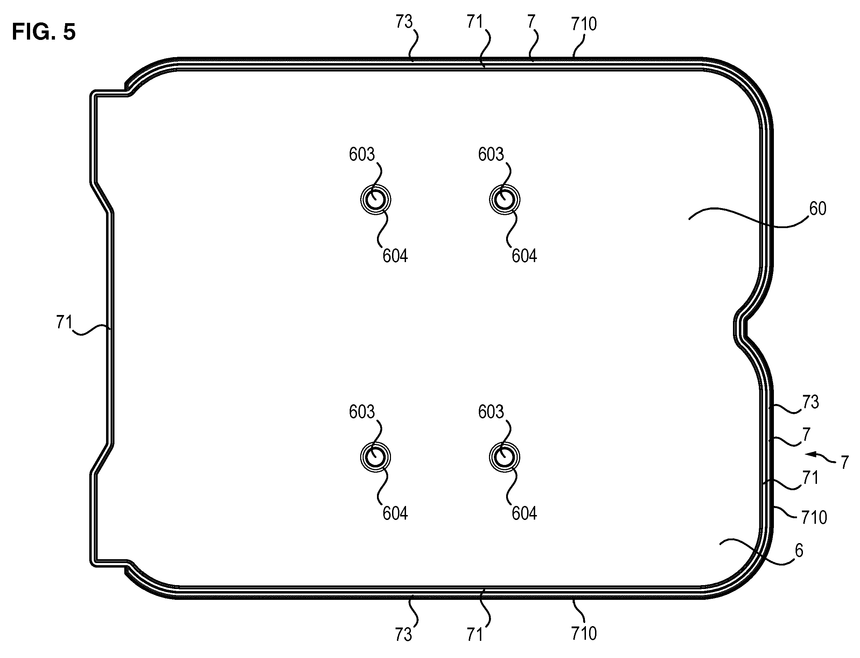

Dans le mode de réalisation représenté à la figure 5, la première pièce 60 a une surface plane 60 tournée vers les éléments 3.

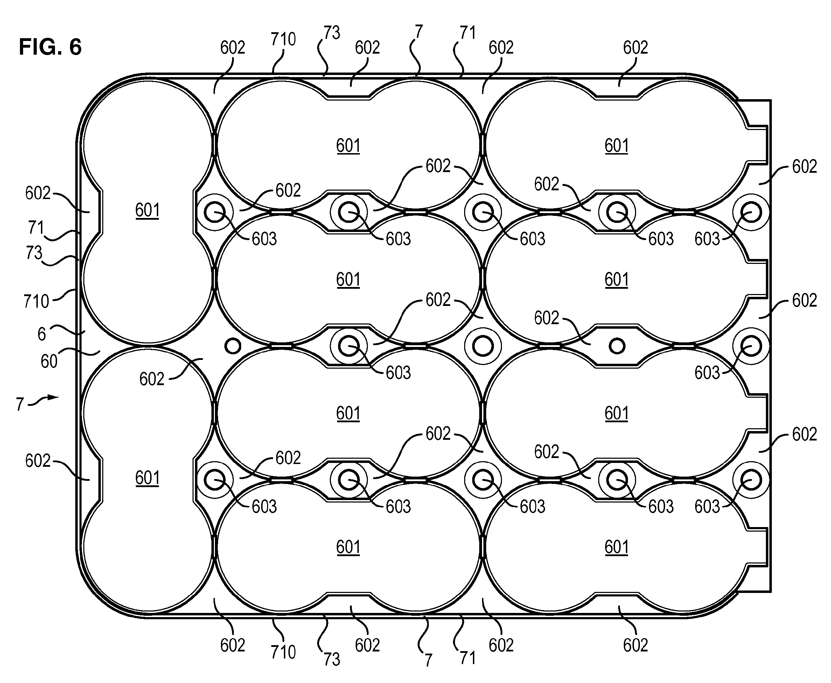

Dans le mode de réalisation représenté à la figure 6, la première pièce 60 comporte sur sa surface 60 tournée vers les éléments 3, des creux 601 de logement du premier côté 31 des éléments 3, ces creux 601 de logement étant séparés par des plots 602. Les creux 601 de logement servent par exemple à loger le côté 31 de deux éléments 3 juxtaposés, et/ou les barrettes de connexion 35 ou certains des éléments de connexion reliant les éléments 3 entre eux. Cette configuration permet la séparation des éléments et l'isolation des éléments (chacun étant de potentiel différent) les uns par rapport aux autres.

Dans les modes de réalisation représentés aux figures 2, 3, 4 et 8, il est prévu en outre une deuxième entretoise 9 de positionnement. Cette deuxième entretoise 9 de positionnement comporte la première partie 92 d'appui et la deuxième partie 91. Cette deuxième entretoise 9 de positionnement prend place à l'interface de la paroi 22 et des parois latérales 23-26. Cette entretoise 9 forme un anneau 9 d'entretoisement assurant tout comme l'entretoise 7 la liaison entre la pièce d'habillage 8 et une troisième pièce d'habillage 10 collée à la paroi supérieure 22, pour des besoins d'amélioration de l'isolation électrique du module et de maintien des pièces d'habillage

La troisième pièce 10 d'habillage est disposée entre la paroi 22 et le deuxième côté 32 des éléments 3. Cette pièce 10 est en un matériau isolant de l'électricité, par exemple en un matériau synthétique compressible, pouvant être de la mousse.

L'anneau 9 est monté sur les éléments 3, en étant périphérique à ces éléments 3. L'anneau 9 est donc situé en commun contre plusieurs des éléments 3, c'est-à-dire contre les éléments 3 qui sont situés le plus à l'extérieur. L'anneau 9 passe en commun sur l'extérieur des deuxièmes côtés 32 des éléments 3 situés le plus à l'extérieur, c'est-à-dire ceux proches des parois 23, 24, 25, 26. L'anneau 9 entoure donc plusieurs éléments 3.

Ainsi que cela est représenté aux figures 3 et 4, l'anneau 9 d'entretoisement est situé en commun contre ladite zone desdits éléments 3, cette zone comprenant la partie de leur arête proximale 320 par rapport aux parois 23, 24, 25, 26. Pour assurer un meilleur maintien des éléments 3 grâce à l'anneau 9 d'entretoisement, l'anneau 9 comprend sur un de ses côtés une lèvre 96 formant un V s'écartant de la paroi du boîtier pour suivre le contour des éléments.

L'anneau 9 d'entretoisement comporte un premier rebord 91 et un deuxième rebord 92 adjacent au premier rebord 91. Les deux rebords 91 et 92 servent à appuyer contre deux côtés adjacents des éléments extérieurs 3 dans ladite zone de ceux-ci et contre les parois respectivement 22 et 23, 24, 25, 26 du boîtier. Ces deux côtés adjacents sur les éléments extérieurs 3 forment un angle non nul entre eux. Les rebords adjacents 91 et 92 forment également un angle non nul entre eux, comparable à celui présent entre les deux côtés adjacents des éléments (soit environ 90°). Le rebord 91 est un rebord d'appui contre l'extrémité de la surface latérale 30 des éléments 3 extérieurs, éloignée de la première pièce 60 et donc proche du deuxième côté 32 et contre les parois 23-26. Il forme la deuxième partie de la deuxième entretoise 9. Le rebord 92 est un rebord d'appui sur les côtés 32 des éléments 3, éloignés de la première pièce 60, et contre la paroi 22. Il forme la première partie de la deuxième entretoise 9.

L'anneau 9 d'entretoisement a par exemple une forme de cadre ayant des parties rectilignes en face des deuxièmes parois.

L'anneau 9 comporte par exemple, ainsi que cela est représenté à la figure 3, sur son premier rebord 91 tourné vers les deuxièmes parois 23, 24, 25, 26, une saillie 94 s'étendant parallèlement à la paroi 22 en direction de la paroi 23 du boîtier. La saillie 94 du rebord 91 est d'épaisseur supérieure au reste du rebord 91. Cette épaisseur est prise selon la direction normale à la deuxième paroi. La saillie est placée sur la face de l'entretoise tournée vers la deuxième paroi 23, 24, 25, 26 correspondante. Cette saillie 94 est située à distance de l'extrémité libre 97 du rebord 91 de sorte que le rebord 91 présente au voisinage de l'extrémité libre 97 un évidement 93 servant à loger un autre bord 87 de la deuxième pièce 8 d'habillage, qui est celui éloigné du premier bord 81. L'évidement 93 est tourné vers la deuxième paroi 23, 24, 25 et/ou 26. Une face 98 de la saillie 94 essentiellement parallèle à la paroi 22 sert de butée de positionnement de la pièce d'habillage 8. Ainsi, lorsque le bord 87 se trouve dans l'évidement 93, ce bord 87 est coincé entre la deuxième paroi 23, 24, 25 et/ou 26 et l'extrémité libre 97 du rebord 91, assurant un bon maintien en position de la pièce 8 et assurant en même temps une continuité de l'isolation électrique dans cette zone en évitant les lacunes d'isolation électrique. Le rebord 92 pourrait également comprendre une saillie et/ou un évidement tels que décrits ci-dessus pour accueillir la pièce d'habillage 10.

On notera qu'en variante la pièce d'habillage 10 pourrait être d'un seul tenant avec l'entretoise 9 formant l'interface entre la paroi 22 et les parois latérales 23.

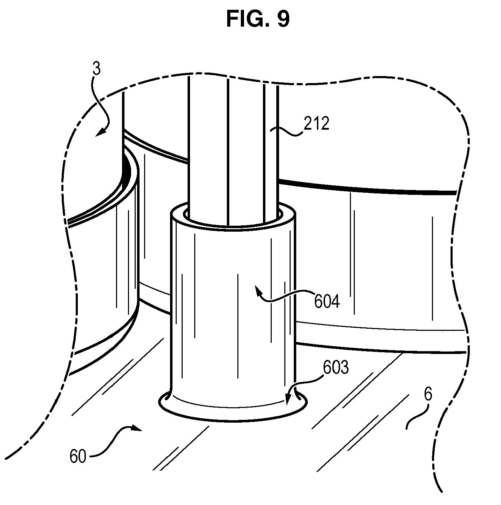

Dans les modes de réalisation représentés aux figures 5, 6, 7 et 9, la pièce 60 de dissipation thermique comporte un ou plusieurs trous traversants 603 permettant le passage d'une ou plusieurs parties métalliques 212 fixées à la première paroi 21. Aux figures 5 et 9, le trou 603 est par exemple prolongé vers l'intérieur, c'est-à-dire vers les éléments 3, par un fût 604 fixé à la pièce 60, à savoir à la plaque 60, ce ou ces fût(s) 604 permettant le passage des parties 212, tout en augmentant la ligne de fuite entre la partie 212 et les éléments 3 par la hauteur de ce fût 604 sur la pièce 60, étant donné que le fût 604 est en un matériau isolant de l'électricité, alors que la partie 212 est en un matériau conducteur de l'électricité. Les parties 212 sont par exemple des renforts métalliques par lesquels la paroi inférieure 21 est fixée à la paroi supérieure 22, le boîtier 2 et donc cette partie 212 étant par exemple mis à la masse, le boîtier 2 étant donc à un potentiel électrique différent d'au moins une des bornes électriques des éléments 3.

Aux figures 6 et 7, les trous 603 sont prévus dans les parties en saillie 602 de la pièce 60, et sont donc d'une plus grande hauteur que les creux 61 recevant les éléments 3.

Pour assembler le module 1, on forme d'abord le sous-ensemble 100 destiné à être entouré par le boîtier 2, de la manière suivante.

On place d'abord les éléments 3 de stockage d'énergie sur la première pièce 60 soutenue par un outil rigide de support.

Puis on met en place l'anneau 9 sur la partie extérieure des éléments 3 extérieurs pour entourer ces éléments 3.

Puis on met en place la deuxième pièce 8 d'habillage autour des éléments 3 extérieurs, en collant cette pièce 8 sur l'extérieur de la surface latérale 30 des éléments 3 extérieurs à l'aide d'un adhésif. Le bord 81 de la pièce 8 est placé dans l'évidement 72 du rebord inférieur 71 de l'entretoise 7, tandis que le bord supérieur 87 de la pièce 8 est placé dans l'évidement supérieur 93 de l'anneau 9 supérieur. Cette pièce 8 d'habillage a par exemple un côté adhésivé tourné vers les éléments 3. Cette pièce 8 adhésivée permet par exemple également de maintenir la câblerie (moyens de connexion des éléments 3) en place dans le module 1. Les deux extrémités 863 et 864 de la pièce 8 sont par exemple mises en chevauchement l'une sur l'autre en étant par exemple placées dans une partie correspondante de la pièce 60, ou aboutées.

Le sous-ensemble 100 ainsi pré-assemblé comprend la pièce 60, l'entretoise 7 fixée à la pièce 60, la deuxième pièce 8 d'habillage et l'anneau 9.

La ou les deuxièmes parois 23, 24, 25 et/ou 26 sont ensuite appliquées contre l'entretoise 7 de positionnement dans la direction respective H23, H24, H25, H26 perpendiculaire au rebord 71 et allant vers la pièce 8 d'habillage, c'est-à-dire dans les sens horizontaux H23, H24, H25, H26 à la figure 2. Ces directions H23, H24, H25, H26 d'application des parois respectives 23, 24, 25 et/ou 26 sont donc par exemple sensiblement parallèles à la pièce 60 et à la première paroi 21 et/ou sensiblement perpendiculaires aux surfaces latérales 30 des éléments 3. Les parois 23, 24, 25 et/ou 26 sont ainsi appliquées contre l'entretoise 7 de positionnement et contre l'anneau 9 d'entretoisement pour arriver dans la position intermédiaire d'assemblage représentée aux figures 1 et 3, de sorte à comprimer les bords 81 et 87 de la pièce 8 dans les évidements 72 et 93. Dans cette position intermédiaire d'assemblage, la première entretoise 7 se trouve contre les deuxièmes parois 23, 24, 25 et/ou 26. Dans cette position d'assemblage, l'anneau 9 se trouve contre les deuxièmes parois 23, 24, 25 et/ou 26.

Puis la pièce 10 d'habillage est mise sur les éléments 3. La paroi 22 comporte par exemple cette pièce 10 d'habillage fixée dessous. On fixe ensuite la parois 22, 23, 24, 25 et 26 les unes aux autres par exemple par des vis. On retourne ensuite le sous-ensemble coiffé des parois 22, 23, 24, 25 et 26 fixées les unes aux autres. On referme alors le boitier 2 en fixant par le dessus la paroi 21 aux parois 23, 24, 25 et 26, les parties 212 de renfort mécanique étant ajoutées au travers des trous 603 si nécessaire. Le module 1 se trouve alors dans l'état fini d'assemblage.

Le procédé selon l'invention n'est pas limité à ce qui a été décrit ici : par exemple, en variante, l'entretoise 7 pourrait être agencée sur la paroi 21 avant que les éléments 3 ne soient placés sur celle-ci. D'autres modifications sont bien entendu également envisageables.

Grâce à l'invention, l'assemblage du module est facilité dans un volume réduit et on obtient un temps de cycle d'assemblage très court pour le module d'éléments 3 de stockage d'énergie électrique. On augmente également la fiabilité vis-à-vis de la fonction d'isolation électrique.

## Revendications

1. Entretoise de positionnement (7 ; 9) pour positionner des éléments de stockage d'énergie électrique dans un module de stockage d'énergie électrique, **caractérisée en ce que** l'entretoise comprend une première partie (6 ; 92) d'appui et une deuxième partie (71, 91) formant un rebord (71, 91) par rapport à la première partie (6 ; 92), l'entretoise (7) de positionnement comportant à l'extrémité libre de sa deuxième partie (71, 91) au moins un évidement (72, 93) de logement, l'entretoise étant réalisée en un matériau isolant de l'électricité.

2. Entretoise selon la revendication précédente, dans laquelle l'entretoise constitue un anneau (7, 9) fermé d'entretoisement.

3. Entretoise selon la revendication 1, dans laquelle la première partie (6 ; 92) est une couche (60 ; 92) de matériau sensiblement plane délimitée par un contour extérieur, le contour extérieur étant longé au moins partiellement par la deuxième partie (71, 91).

4. Entretoise selon la revendication précédente, dans laquelle la deuxième partie (71, 91) comprend plusieurs portions non reliées entre elles.

5. Entretoise selon l'une quelconque des revendications précédentes, dans laquelle la deuxième partie (71, 91) est sensiblement perpendiculaire à la première partie (6 ; 92).

6. Module (1) de stockage d'énergie, comportant un boîtier extérieur (2) ayant des parois extérieures (21, 22, 23, 24, 25, 26), comprenant au moins une première paroi (21, 22) et au moins une deuxième paroi (23, 24, 25) adjacente à la première paroi (21, 22), les parois (21, 22, 23, 24, 25, 26) délimitant un espace intérieur dans lequel sont logés des éléments (3) de stockage d'énergie électrique,
**caractérisé en ce que** le module comprend au moins une entretoise de positionnement (7 ; 9) selon l'une quelconque des revendications précédentes pour positionner au moins certains des éléments (3) de stockage d'énergie électrique par rapport à la première paroi (21, 22) et par rapport à la deuxième paroi (23, 24, 25) adjacente, la première partie (6 ; 92) de l'entretoise étant destinée à assurer le positionnement par rapport à la au moins une première paroi (21, 22) et la deuxième partie (71, 91) de l'entretoise étant destinée à assurer le positionnement par rapport à la au moins une deuxième paroi (23, 24, 25).

7. Module selon la revendication 6, dans lequel la première partie (6 ; 92) de l'entretoise est en appui contre la au moins une première paroi (21, 22).

8. Module selon la revendication 6, dans lequel la deuxième partie (71, 91) de l'entretoise est en appui contre la au moins une deuxième paroi (23, 24, 25).

9. Module selon l'une quelconque des revendications 6 à 8, dans lequel le module comprend une première pièce (60) d'habillage en un matériau isolant de l'électricité, destinée à recouvrir au moins partiellement la première paroi (21) du module pour être située entre la première paroi (21) et les éléments (3) de stockage d'énergie électrique.

10. Module selon la revendication 9, dans lequel la première pièce (6) d'habillage est une pièce (60) de dissipation thermique et d'isolation électrique, réalisée en un matériau conducteur thermiquement et s'étendant sensiblement parallèlement à la première paroi (21), pour dissiper vers cette première paroi (21) de la chaleur dégagée par les éléments (3) de stockage d'énergie électrique.

11. Module selon la revendication 10, dans lequel la pièce (6) de dissipation thermique et d'isolation électrique est constituée par la première partie (60) de la au moins une entretoise (7).

12. Module selon la revendication 10, dans lequel la première partie de l'entretoise est en appui contre la première paroi avec interposition de la première pièce d'habillage.

13. Module selon l'une quelconque des revendications 6 à 12, dans lequel le module comprend au moins une deuxième pièce (8) d'habillage en un matériau isolant de l'électricité, destinée à recouvrir au moins partiellement la au moins une deuxième paroi (23, 24, 25) du module pour être située entre ladite deuxième paroi (23, 24, 25) et les éléments (3) de stockage d'énergie électrique, l'évidement (72, 93) de la au moins une entretoise servant à loger un bord (81, 87) de la deuxième pièce (8) d'habillage.

14. Module selon la revendication 13, dans lequel la deuxième pièce (8) d'habillage est en un matériau compressible au moins dans son bord (81, 87) logé dans l'évidement (72, 93) pour assurer un maintien de la pièce d'habillage relativement à l'entretoise.

15. Module selon la revendication 13 ou 14, dans lequel la au moins une deuxième pièce (8) d'habillage est constituée par une bande enroulée autour de la totalité des éléments (3) de stockage d'énergie électrique et fixée à ces éléments(3) de stockage d'énergie électrique.

16. Module selon l'une quelconque des revendications 6 à 15, dans lequel l'entretoise constitue un anneau (7, 9) fermé d'entretoisement, l'anneau (7, 9) formant cette entretoise étant dimensionné pour entourer une pluralité d'éléments (3) de stockage d'énergie électrique juxtaposés.

17. Module selon la revendication précédente, dans lequel l'anneau (7, 9) comprend, à l'interface entre deux éléments (7, 9) déterminés adjacents, au moins une lèvre (96) configurée pour écarter localement l'entretoise par rapport à la deuxième paroi (23, 24, 25) et suivre le contour des deux éléments adjacents déterminés.

18. Module suivant l'une quelconque des revendications 6 à 17, **caractérisé en ce que** le boîtier extérieur (2) a la forme générale d'un parallélépipède, comprenant deux premières faces (21, 22) constituant les faces de plus grandes aires du boîtier (2), adjacentes à quatre autres faces (23, 24, 25, 26) du parallélépipède, désignées deuxièmes faces, il est prévu comme entretoise au moins une première entretoise (7), dont la première partie (6) est en appui contre une des deux premières faces (21, 22) formant la première paroi (21, 22) et dont la deuxième partie est en appui contre au moins l'une des deuxièmes faces (23, 24, 25) formant la au moins une deuxième paroi (23, 24, 25).

19. Module selon la revendication précédente, dans lequel il est prévu comme entretoise au moins une deuxième entretoise (9), dont la première partie (92) est en appui contre l'autre première face (22) formant une autre première paroi (22) du boîtier (2) et dont la deuxième partie (91) est en appui contre au moins l'une des deuxièmes faces (23, 24, 25) formant la au moins une deuxième paroi (23, 24, 25).

20. Module selon la revendication précédente, dans lequel le module comprend :
- l'unique première entretoise (7) dont la première partie (6) est constituée par une première pièce (60) d'habillage en un matériau isolant de l'électricité, destinée à recouvrir au moins partiellement la première paroi (21) du module pour être située entre la première paroi (21) et les éléments (3) de stockage d'énergie électrique, la première pièce (60) d'habillage étant une pièce (60) de dissipation thermique et d'isolation électrique, réalisée en un matériau conducteur thermiquement et s'étendant sensiblement parallèlement à la première paroi (21), pour dissiper vers cette première paroi (21) de la chaleur dégagée par les éléments (3) de stockage d'énergie électrique,
et
- l'unique deuxième entretoise (9), formant un anneau d'entretoisement.

21. Procédé d'assemblage d'un module selon l'une quelconque des revendications 6 à 20, comprenant les étapes suivantes :
on forme un ensemble comprenant les éléments (3) de stockage d'énergie électrique et la au moins une entretoise de sorte que la première partie (6, 92) de chaque entretoise soit placée sur ou sous les éléments (3) et que la deuxième partie (71, 91) de l'entretoise (7, 9) s'étende latéralement à l'extérieur de l'ensemble selon un plan comprenant une parallèle à la direction longitudinale (L) des éléments (3) de stockage,
on entoure l'ensemble d'une bande d'habillage (8) constituant une deuxième pièce (8) d'habillage de sorte que le bord (81) de la bande (8) soit placé dans l'évidement (72, 93) de la deuxième partie (71, 91) de l'entretoise (7, 9), et on fixe la bande aux éléments (3),
on assemble au moins les deuxièmes parois (23-26) du boîtier (2) sur les éléments (3) de sorte que les parois sont en contact avec la bande (8) d'habillage.

## Patentansprüche

1. Positionierungs-Abstandhalter (7; 9) zur Positionierung von Stromspeicherelementen in einem Stromspeichermodul, **dadurch gekennzeichnet, dass** der Abstandhalter einen ersten Stützabschnitt (6; 92) und einen zweiten Abschnitt (71, 91), der im Verhältnis zum ersten Abschnitt (6; 92) einen Randanschlag (71, 91) bildet, umfasst, wobei der Positionierungs-Abstandhalter (7) am freien Ende seines zweiten Abschnitts (71, 91) mindestens eine Aufnahmeaussparung (72, 93) aufweist, wobei der Abstandhalter aus einem stromisolierenden Material hergestellt ist.

2. Abstandhalter nach vorangehendem Anspruch, wobei der Abstandhalter einen geschlossenen Abstandhalterring (7, 9) bildet.

3. Abstandhalter nach Anspruch 1, wobei der erste Abschnitt (6; 92) eine etwa ebene Materialschicht (60; 92) ist, die von einer Außenkontur begrenzt ist, wobei die Außenkontur mindestens zum Teil vom zweiten Abschnitt (71, 91) begleitet wird.

4. Abstandhalter nach vorangehendem Anspruch, wobei der zweite Abschnitt (71, 91) mehrere nicht untereinander verbundene Abschnitte umfasst.

5. Abstandhalter nach einem der vorangehenden Ansprüche, wobei der zweite Abschnitt (71, 91) etwa senkrecht zum ersten Abschnitt (6; 92) ist.

6. Energiespeichermodul (1), das ein äußeres Gehäuse (2) mit Außenwänden (21, 22, 23, 24, 25, 26) aufweist, umfassend mindestens eine erste Wand (21, 22) und mindestens eine zur ersten Wand (21, 22) benachbarte zweite Wand (23, 24, 25), wobei die Wände (21, 22, 23, 24, 25, 26) einen Innenraum begrenzen, in dem Stromspeicherelemente (3) untergebracht sind,
**dadurch gekennzeichnet, dass** das Modul mindestens einen Positionierungs-Abstandhalter (7; 9) nach einem der vorangehenden Ansprüche umfasst, um mindestens einige der Stromspeicherelemente (3) im Verhältnis zur ersten Wand (21, 22) und im Verhältnis zur benachbarten zweiten Wand (23, 24, 25) zu positionieren, wobei der erste Abschnitt (6; 92) des Abstandhalters bestimmt ist, die Positionierung im Verhältnis zur mindestens einen ersten Wand (21, 22) zu sichern und der zweite Abschnitt (71, 91) des Abstandhalters bestimmt ist, die Positionierung im Verhältnis zur mindestens einen zweiten Wand (23, 24, 25) zu sichern.

7. Modul nach Anspruch 6, wobei sich der erste Abschnitt (6; 92) des Abstandhalters auf der mindestens einen ersten Wand (21, 22) abstützt.

8. Modul nach Anspruch 6, wobei sich der zweite Abschnitt (71, 91) des Abstandhalters auf der mindestens einen zweiten Wand (23, 24, 25) abstützt.

9. Modul nach einem der Ansprüche 6 bis 8, wobei das Modul ein erstes Verkleidungsteil (60) aus einem stromisolierenden Material umfasst, das bestimmt ist, die erste Wand (21) des Moduls mindestens zum Teil abzudecken, um sich zwischen der ersten Wand (21) und den Stromspeicherelementen (3) zu befinden.

10. Modul nach Anspruch 9, wobei das erste Verkleidungsteil (6) ein Wärmeabstrahlungs- und Stromisolationsteil (60) ist, das aus einem thermisch leitenden Material hergestellt ist und sich etwa parallel zur ersten Wand (21) erstreckt, um zu dieser ersten Wand (21) von den Stromspeicherelementen (3) abgegebene Wärme abzustrahlen.

11. Modul nach Anspruch 10, wobei das Wärmeabstrahlungs- und Stromisolationsteil (6) vom ersten Abschnitt (60) des mindestens einen Abstandhalters (7) gebildet ist.

12. Modul nach Anspruch 10, wobei sich der erste Abschnitt des Abstandhalters auf der ersten Wand mit Zwischenstellung des ersten Verkleidungsteils abstützt.

13. Modul nach einem der Ansprüche 6 bis 12, wobei das Modul mindestens ein zweites Verkleidungsteil (8) aus einem stromisolierenden Material umfasst, das bestimmt ist, die mindestens eine zweite Wand (23, 24, 25) des Moduls mindestens zum Teil abzudecken, um sich zwischen der zweiten Wand (23, 24, 25) und den Stromspeicherelementen (3) zu befinden, wobei die Aussparung (72, 93) des mindestens einen Abstandhalters zur Unterbringung eines Rands (81, 87) des zweiten Verkleidungsteils (8) dient.

14. Modul nach Anspruch 13, wobei das zweite Verkleidungsteil (8) aus einem Material ist, das mindestens an seinem Rand (81, 87), der in der Aussparung (72, 93) untergebracht ist, komprimierbar ist, um einen Halt des Verkleidungsteils relativ zum Abstandhalter zu sichern.

15. Modul nach Anspruch 13 oder 14, wobei das mindestens eine zweite Verkleidungsteil (8) von einem Band gebildet ist, das um die Gesamtheit der Stromspeicherelemente (3) gewickelt ist und an diesen Stromspeicherelementen (3) befestigt ist.

16. Modul nach einem der Ansprüche 6 bis 15, wobei der Abstandhalter einen geschlossenen Abstandhalterring (7, 9) bildet, wobei der Ring (7, 9), der diesen Abstandhalter bildet, bemessen ist, um eine Vielzahl von nebeneinanderliegenden Stromspeicherelementen (3) zu umgeben.

17. Modul nach vorangehendem Anspruch, wobei der Ring (7, 9) an der Schnittstelle zwischen zwei bestimmten benachbarten Elementen (7, 9) mindestens eine Lippe (96) umfasst, die konfiguriert ist, um den Abstandhalter im Verhältnis zur zweiten Wand (23, 24, 25) lokal zu beabstanden und der Kontur der zwei bestimmten benachbarten Elemente zu folgen.

18. Modul nach einem der Ansprüche 6 bis 17, **dadurch gekennzeichnet, dass** das äußere Gehäuse (2) die allgemeine Form eines Parallelepipeders hat, umfassend zwei erste Seiten (21, 22), die die Seiten mit dem größten Platz des Gehäuses (2) bilden, die zu vier anderen Seiten (23, 24, 25, 26) des Parallelepipeders benachbart sind, die als zweite Seiten bezeichnet werden, dass als Abstandhalter mindestens ein erster Abstandhalter (7) vorgesehen ist, dessen erster Abschnitt (6) sich auf einer der zwei ersten Seiten (21, 22) abstützt, die die erste Wand (21, 22) bilden, und dessen zweiter Abschnitt sich auf mindestens einer der zweiten Seiten (23, 24, 25) abstützt, die die mindestens eine zweite Wand (23, 24, 25) bilden.

19. Modul nach vorangehendem Anspruch, wobei als Abstandhalter mindestens ein zweiter Abstandhalter (9) vorgesehen ist, dessen erster Abschnitt (92) sich auf einer anderen ersten Seite (22) abstützt, die eine andere erste Wand (22) des Gehäuses (2) bildet, und dessen zweiter Abschnitt (91) sich auf mindestens einer der zweiten Seiten (23, 24, 25) abstützt, die die mindestens eine zweite Wand (23, 24, 25) bilden.

20. Modul nach vorangehendem Anspruch, wobei das Modul umfasst:
- den einzigen ersten Abstandhalter (7), dessen erster Abschnitt (6) von einem ersten Verkleidungsteil (60) aus einem stromisolierenden Material gebildet ist, das bestimmt ist, die erste Wand (21) des Moduls mindestens zum Teil abzudecken, um sich zwischen der ersten Wand (21) und den Stromspeicherelementen (3) zu befinden, wobei das erste Verkleidungsteil (60) ein Wärmeabstrahlungs- und Stromisolationsteil (60) ist, das aus einem thermisch leitenden Material hergestellt ist und sich etwa parallel zur ersten Wand (21) erstreckt, um zu dieser ersten Wand (21) von den Stromspeicherelementen (3) abgegebene Wärme abzustrahlen,
und
- den einzigen zweiten Abstandhalter (9), der einen Abstandhalterring bildet.

21. Montageverfahren eines Moduls nach einem der Ansprüche 6 bis 20, das die folgenden Schritte umfasst:
Bilden einer Einheit, die die Stromspeicherelemente (3) und den mindestens einen Abstandhalter umfasst, so dass der erste Abschnitt (6, 92) jedes Abstandhalters auf oder unter den Elementen (3) platziert ist und sich der zweite Abschnitt (71, 91) des Abstandhalters (7, 9) seitlich außerhalb der Einheit gemäß einer Ebene erstreckt, die eine Parallele zur Längsrichtung (L) der Speicherelemente (3) umfasst,
Umgeben der Einheit mit einem Verkleidungsband (8), welches ein zweites Verkleidungsteil (8) bildet, so dass der Rand (81) des Bands (8) in der Aussparung (72, 93) des zweiten Abschnitts (71, 91) des Abstandhalters (7, 9) platziert ist, und Befestigen des Bands an den Elementen (3),
Verbinden mindestens der zweiten Wände (23-26) des Gehäuses (2) auf den Elementen (3), so dass die Wände mit dem Verkleidungsband (8) im Kontakt sind.

## Claims

1. A positioning spacer (7; 9) for positioning electrical energy-storage elements in an electrical energy storage module, **characterized in that** the spacer comprises a first support part (6; 92) and a second part (71, 91) forming a rim (71, 91) relative to the first part (6; 92), the positioning spacer (7) comprising at the free end of its second part (71, 91) at least one housing recess (72, 93), the spacer being made of electrically insulating material.

2. The spacer according to the preceding claim, wherein the spacer constitutes a closed spacing ring (7, 9).

3. The spacer according to claim 1, wherein the first part (6; 92) is a substantially flat layer (60; 92) of material delimited by an outer contour, the outer contour being bordered at least partially by the second part (71, 91).

4. The spacer according to the preceding claim, wherein the second part (71, 91) comprises several portions not connected to each other.

5. The spacer according to any one of the preceding claims, wherein the second part (71, 91) is substantially perpendicular to the first part (6; 92).

6. An energy-storage module (1), comprising an outer case (2) having outer walls (21, 22, 23, 24, 25, 26), comprising at least one first wall (21, 22) and at least one second wall (23, 24, 25) adjacent to the first wall (21, 22), the walls (21, 22, 23, 24, 25, 26) delimiting an inner space wherein are housed electrical energy-storage elements (3),
**characterized in that** the module comprises at least one positioning spacer (7; 9) according to any one of the preceding claims for positioning at least some of the electrical energy-storage elements (3) relative to the first wall (21, 22) and relative to the adjacent second wall (23, 24, 25), the first part (6; 92) of the spacer being intended to ensure positioning relative to the at least one first wall (21, 22) and the second part (71, 91) of the spacer being intended to ensure positioning relative to the at least one second wall (23, 24, 25).

7. The module according to claim 6, wherein the first part (6; 92) of the spacer is supported against the at least one first wall (21, 22).

8. The module according to claim 6, wherein the second part (71, 91) of the spacer is supported against the at least one second wall (23, 24, 25).

9. The module according to any one of claims 6 to 8, wherein the module comprises a first lining piece (60) made of electrically insulating material, intended to at least partially cover the first wall (21) of the module to be located between the first wall (21) and the electrical energy-storage elements (3).

10. The module according to claim 9, wherein the first lining piece (6) is a thermal dissipation and electrical insulation piece (60), made of thermally conductive material and extending substantially parallel to the first wall (21), to dissipate towards this first wall (21) heat released by the electrical energy-storage elements (3).

11. The module according to claim 10, wherein the thermal and electrical insulation dissipation piece (6) is constituted by the first part (60) of the at least one spacer (7).

12. The module according to claim 10, wherein the first part of the spacer is supported against the first wall with interposition of the first lining piece.

13. The module according to any one of claims 6 to 12, wherein the module comprises at least one second lining piece (8) made of electrically insulating material, intended to cover at least partially the at least one second wall (23, 24, 25) of the module to be located between said second wall (23, 24, 25) and the electrical energy-storage elements (3), the recess (72, 93) of the at least one spacer serving to house an edge (81, 87) of the second lining piece (8).

14. The module according to claim 13, wherein the second lining piece (8) is made of compressible material at least in its edge (81, 87) housed in the recess (72, 93) to ensure holding of the lining piece relative to the spacer.

15. The module according to claim 13 or 14, wherein the at least one second lining piece (8) is constituted by a band wound around all the energy-storage electrical elements (3) and fixed to these electrical energy-storage elements (3).

16. The module according to any one of claims 6 to 15, wherein the spacer constitutes a closed spacing ring (7, 9), the ring (7, 9) forming this spacer being dimensioned to surround a plurality of juxtaposed electrical energy-storage elements (3).

17. The module according to the preceding claim, wherein the ring (7, 9) comprises, at the interface between two determined adjacent elements (7, 9), at least one lip (96) configured to locally move away the spacer relative to the second wall (23, 24, 25) and follow the contour of the two determined adjacent elements.

18. The module according to any one of claims 6 to 17, **characterized in that** the outer case (2) has the general form of a parallelepiped, comprising two first faces (21, 22) constituting the faces of largest area of the case (2), adjacent to four other faces (23, 24, 25, 26) of the parallelepiped, designated second faces, there is provided as spacer at least one first spacer (7), whereof the first part (6) is supported against one of the two first faces (21, 22) forming the first wall (21, 22) and whereof the second part is supported against at least one of the second faces (23, 24, 25) forming the at least one second wall (23, 24, 25).

19. The module according to the preceding claim, wherein it is provided as spacer at least one second spacer (9), whereof the first part (92) is supported against the other first face (22) forming another first wall (22) of the case (2) and whereof the second part (91) is supported against at least one of the second faces (23, 24, 25) forming the at least one second wall (23, 24, 25).

20. The module according to the preceding claim, wherein the module comprises:
- the sole first spacer (7) whereof the first part (6) is constituted by a first lining piece (60) made of electrically insulating material, intended to cover at least partially the first wall (21) of the module to be located between the first wall (21) and the electrical energy-storage elements (3), the first lining piece (60) being a thermal dissipation and electrical insulation piece (60), made of thermally conductive material and extending substantially parallel to the first wall (21), to dissipate towards this first wall (21) heat released by the electrical energy-storage elements (3),
and
- the sole second spacer (9), forming a spacing ring.

21. A method of assembly of the module according to any one of claims 6 to 20, comprising the following steps:
a set comprising the electrical energy-storage elements (3) and the at least one spacer is formed such that the first part (6, 92) of each spacer is placed on or under the elements (3) and the second part (71, 91) of the spacer (7, 9) extends laterally outside the set according to a plane comprising a parallel to the longitudinal direction (L) of the storage elements (3),
the set is surrounded by a lining band (8) constituting a second lining piece (8) such that the edge (81) of the band (8) is placed in the recess (72, 93) of the second part (71, 91) of the spacer (7, 9), and the band is fixed to the elements (3),
at least the second walls (23-26) of the case (2) are assembled on the elements (3) such that the walls are in contact with the lining band (8).
